**Europäisches Patentamt**

**European Patent Office**

**Office européen des brevets**

(19)

(11) Numéro de publication : **0 357 515 B1**

(12) **FASCICULE DE BREVET EUROPEEN**

(45) Date de publication du fascicule du brevet :
**07.01.93 Bulletin 93/01**

(51) Int. Cl.$^5$ : **G01C 21/22**

(21) Numéro de dépôt : **89402389.4**

(22) Date de dépôt : **01.09.89**

(54) **Système de navigation terrestre visualisant en temps réel la position d'un véhicule.**

(30) Priorité : **02.09.88 FR 8811497**

(43) Date de publication de la demande :
**07.03.90 Bulletin 90/10**

(45) Mention de la délivrance du brevet :
**07.01.93 Bulletin 93/01**

(84) Etats contractants désignés :
**DE GB IT NL**

(56) Documents cités :
**EP-A- 0 166 547**
**EP-A- 0 270 911**
**DE-A- 3 434 896**
**DE-A- 3 608 658**

(56) Documents cités :
**GB-A- 2 174 497**
**BOSCH TECHN. BERICHTE, vol. 8, nos. 1,2,
1986, pages 7-14; E.-P. NEUKIRCHNER et al.:
"EVA - ein autarkes Ortungs- undNavigationssystem für Landfahrzeuge"**

(73) Titulaire : **THOMSON-CSF**
**51, Esplanade du Général de Gaulle**
**F-92800 Puteaux (FR)**

(72) Inventeur : **Schorter, Michel**
**THOMSON-CSF SCPI Cédex 67**
**F-92045 Paris la Défense (FR)**

(74) Mandataire : **Courtellemont, Alain et al**
**THOMSON-CSF SCP B.P. 329**
**F-92402 COURBEVOIE CEDEX (FR)**

## Description

La présente invention concerne un système de navigation terrestre permettant de visualiser en temps réel la position d'un véhicule sur une carte, en procédant par recalage automatique à partir de données cartographiques numériques stockées dans une mémoire de masse.

Connaître et visualiser en temps réel et de façon autonome la position d'un véhicule terrestre mobile nécessite l'installation a son bord :

- de capteurs de position, de vitesse ou/et d'accélération selon un ou plusieurs axes ;
- d'un dispositif calculateur qui détermine, à partir des données fournies par les capteurs, la position du véhicule en coordonnées géographiques par rapport à un système de référence universel ou local ;
- d'un dispositif de visualisation pour afficher la position du véhicule par indication lumineuse sous forme d'un affichage alphanumérique ou cartographique, par exemple en formant un point lumineux ou un réticule sur une carte (visualisée sur un écran de visualisation ou imprimée sur un support papier ou transparent) ;
- d'un circuit interface entre le système et l'opérateur donnant à ce dernier, généralement le pilote du véhicule, la possibilité d'initialiser la position du véhicule au départ et de commander ensuite des recalages de positionnement.

La précision de la localisation est directement liée à celle des capteurs ; c'est pourquoi les systèmes de navigation autonome nécessitent des recalages pour compenser les écarts de mesure résultant des imprécisions et des dérives des capteurs (gyromètres, gyroscopes, odomètres, compas magnétiques, etc. Ces recalages peuvent être périodiques ou réalisés dans certaines conditions prédéterminées. Leur fréquence est liée principalement à la précision des capteurs, mais le choix de capteurs performants conduit à des solutions de coût élevé.

Ainsi il est connu par les demandes de brevet européen 0 166 547 et 0 270 911 de réaliser un système de navigation fonctionnant par corrélation entre la trajectoire mesurée et les trajectoires possibles sur une carte ; cela conduit à des calculs longs et compliqués et donc chers. De plus, en ce qui concerne le système de navigation selon la demande 0 166 547, il n'est applicable qu'à la circulation en ville étant donné qu'il fonctionne, en particulier, par détection des changements de direction.

Le système de navigation terrestre proposé permet d'éviter ou au moins de réduire ces inconvénients et d'utiliser des capteurs peu performants et donc peu coûteux et de compenser les écarts et les dérives de ces capteurs en procédant de manière particulière pour effectuer les recalages. Il permet, grâce à une base de données cartographiques numérisées, d'effectuer un recalage automatique en temps réel de la route estimée résultant des mesures des capteurs, sur la route réellement suivie par le véhicule. A partir de ces mesures on procède au calcul des écarts entre ces deux routes ; une action correctrice est ensuite exercée produisant l'autocompensation des erreurs de toute origine (assiette, pente, température, accélération, balourd, etc.).

Suivant l'invention il est réalisé un système de navigation terrestre visualisant en temps réel la position d'un véhicule , comportant :

- des capteurs pour élaborer des signaux représentatifs des paramètres de déplacement du véhicule, incluant au moins l'information de distance parcourue à partir d'une position de référence et celle de direction présentée par le véhicule ;
- des moyens de traitement et de numérisation des signaux délivrés par les capteurs ;
- des premiers moyens de calcul pour calculer périodiquement, à partir desdits signaux numérisés, une position dite "estimée" du véhicule ;
- des premiers moyens de mémorisation, en mémoire vive, pour stocker les positions estimées successives déterminant une trajectoire "estimée" du véhicule ;
- une mémoire de masse constituant une base de données cartographiques numériques comportant la description point par point de routes ;
- un lecteur coopérant avec la mémoire de masse pour extraire de celle-ci les données cartographiques correspondant à une zone dite "utile" choisie pour comporter la position estimée du véhicule et fournir au moins des informations de direction liées à chaque point des routes ;
- des seconds moyens de mémorisation, en mémoire vive, pour stocker les données de la zone utile extraites par le lecteur ;
- une unité centrale de gestion et de calcul pour coordonner le fonctionnement du système selon une programmation pré-établie ;
- un dispositif de visualisation pour visualiser la zone utile ainsi que la position du véhicule ;
- et un dispositif de désignation d'un point quelconque de l'image visualisée,

caractérisé en que l'unité centrale, pour permettre le recalage automatique de la trajectoire estimée sur un point de recalage, compare l'information de direction fournie par les capteurs à des informations de direction extraites de la zone utile, à l'intérieur d'une fenêtre d'imprécision centrée sur la position estimée du véhicule, la comparaison consistant à trouver un point et un seul, dans la fenêtre, dont au moins l'information de direction est sensiblement la même que l'information de direction fournie par les capteurs à un instant donné, ce point constituant le point de recalage quand il est trouvé ;

et en ce que la position du véhicule, que visualise le dispositif de visualisation, est la dernière position du véhicule, qu'elle soit obtenue par les premiers moyens de calcul ou par recalage.

Les particularités et avantages de la présente invention apparaîtront dans la description qui suit donnée à titre d'exemple à l'aide des figures annexées qui représentent :

- Fig. 1, un schéma des écarts de navigation présenté en un point de la route estimée par rapport au trajet réel,

- Fig. 2, un schéma du principe de mesure des écarts utilisé dans le système selon l'invention, selon la méthode dite des équicaps,

- Fig.3, un bloc diagramme général d'un système de navigation terrestre conforme à l'invention ;

- Fig.4, un schéma simplifié d'un système de navigation conforme à l'invention monté sur un véhicule terrestre à roues,

- Figs.5a à 5d, des schémas et formes d'ondes relatifs à une réalisation d'un capteur de distance parcourue dans le système selon la figure 4,

- Figs.6a et 6b, des schémas de l'ensemble de visualisation regroupant également les commandes opérateur et le lecteur de mémoire de masse utilisés dans la réalisation selon la figure 4,

- Fig.7, un schéma illustrant l'organisation de la mémoire de masse et notamment le recoupement des secteurs géographiques de la carte mémorisée,

- Fig.8, un diagramme des circuits du poste de commande,

- Fig.9, un diagramme des circuits du boîtier de traitement,

- Fig.10, un schéma relatif à l'élaboration de la route estimée,

- Fig.11, un schéma montrant les paramètres intervenant à chaque incrément de route estimée,

- Fig.12, un schéma illustrant la possibilité d'obtention de plusieurs points réels pouvant entraîner une nouvelle phase d'initialisation,

- Fig.13, un organigramme relatif à l'initialisation du programme,

- Fig.14, un organigramme relatif à la méthode de recalage manuel sur amer pour l'initialisation,

- Fig.15, un organigramme relatif à la méthode de recalage automatique et au calcul de la trajectoire estimée.

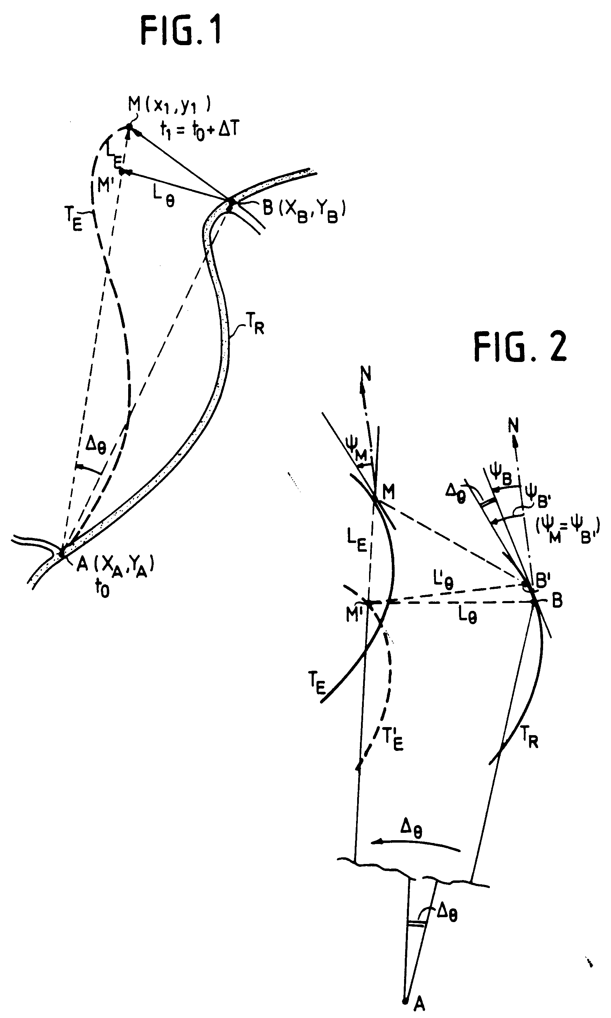

Sur le schéma figure 1 on a représenté par TR la trajectoire réelle, par exemple une route. Cette trajectoire est fournie par une base de données cartographiques. Cette route peut être préprogrammée, correspondant au trajet à suivre par le véhicule, ou délivrée automatiquement par la base de données.

Si les capteurs et les calculs de navigation étaient parfaits, la trajectoire estimée TE du mobile viendrait se superposer exactement sur la trajectoire réelle TR.

Les dérives et écarts présentés, notamment par les capteurs, font que la représentation calculée du mobile décrit une trajectoire estimée $T_E$ distinct de la trajectoire réelle TR. Soit A le point de coordonnées XA, YA correspondant au point initial du mobile, ou au dernier recalage, effectué à un instant to. Le point A est par suite commun aux deux trajectoires TR et TE à l'instant to initial.

Au bout d'un temps t1=to+T , les positions respectives du mobile sur TE et TR sont devenues $M(X_1,Y_1)$ pour la position estimée et B(XB,YB) pour la position réelle.

Cette position réelle B correspond lors d'un recalage, à un point particulier sur la route suivie TR, aisément reconnaissable par l'opérateur. Il peut s'agir, par exemple, comme représenté d'un embranchement de route. Un tel point est dit "amer". Les coordonnées du point B sont fournies par la base de données cartographiques sur commande de l'opérateur. Cette dernière peut s'effectuer, par exemple, en pointant un crayon optique sur la carte visualisée.

L'erreur d'estime $\overrightarrow{MB}$ peut être décomposée en deux vecteurs $\overrightarrow{M'B}$ et $\overrightarrow{MM'}$ correspondant, respectivement à la dérive angulaire $L_\theta$ entre les directions AB et AM, et à la dérive linéaire $L_e$ entre les distances linéaires AB et AM. L'erreur d'estime MB est égale à la somme de ces deux paramètres $L_\theta$ et $L_e$ qui sont données par les relations :

$$\overrightarrow{L_\theta} = |AB| \cdot \widehat{\triangle}\theta,$$

$\widehat{\triangle}\theta$ étant l'angle entre AB et AM.

$$\overrightarrow{L_e} = \overrightarrow{AM} - \overrightarrow{AB}.$$

Plusieurs méthodes peuvent conduire à la connaissance des dérives intégrées $L_\theta$ et $L_e$. On décrit tout d'abord une méthode manuelle de pointage correspondant à une phase d'initialisation préliminaire à l'obtention du fonctionnement avec recalage automatique au cours duquel les erreurs de mesure dues essentiellement aux capteurs sont autocompensées périodiquement.

Avant le départ l'opérateur repère quelques points remarquables ou amers situés successivement sur son parcours (croisement, col, pont, etc.). Grâce à un dispositif manuel (manche, crayon optique) l'opérateur désigne ces points B successifs sur la carte à présenter par le système de visualisation. Par cette opération les coordonnées géographiques correspondantes issues de la base de données sont mémorisées dans un registre. Aux passages successifs de son véhicule en chacun de ces points, l'opérateur, par une opération de désignation manuelle (action sur un poussoir, sur une touche) commande la mémorisation des points estimés successifs M1,M2,M3 correspondants mesurés par les capteurs. En comparant à chaque fois les coordonnées du point réel B et du point estimé calculé M on en déduit les données d'écartométrie qui correspondent aux composantes $L\theta$ et $L_e$ de l'erreur d'estime $\overrightarrow{MB}$, ce qui permet de compenser les dérives des capteurs dans la chaîne de calculs. Cette phase préliminaire de recalage impose une certaine contrainte à l'utilisateur du système car elle nécessite :

- soit une préparation avant le départ pour déterminer un itinéraire et entrer un certain nombre d'amers choisis tout au long du parcours ; dans ce cas l'opérateur pointe son passage sur chacun des amers sans s'arrêter ;
- soit l'arrêt en cours de route sur des amers constituant des points remarquables pour effectuer les pointages précités.

La méthode manuelle qui vient d'être décrite doit être au moins exécutée une fois sur un amer si l'on connaît déjà le cap au départ, sinon au moins deux fois sur deux amers. Elle permet un premier recalage avant de passer au fonctionnement normal avec recalage automatique.

La figure 2 illustre le principe de mesure des écarts lors d'un recalage, conformément à l'invention, selon une méthode préférée dite des "équicaps".

La trajectoire estimée TE fournie par la chaîne de mesure des capteurs se déduit de la trajectoire réelle TR par deux mouvements. Un premier mouvement se traduit par une rotation de centre A et d'amplitude angulaire $\Delta\theta$ qui amène la trajectoire réelle TR en T'E et le point B en M'. Le deuxième mouvement est une translation suivant la direction AM de la quantité $L_E$ qui amène T'E en TE et le point M' en M.

Connaissant par des capteurs, par exemple un gyrocompas ou un compas magnétique, le cap $\psi$ M au point M (le cap correspond à l'angle entre la tangente en M à la trajectoire estimée TE et la direction N du Nord magnétique), on recherche dans le fichier de données cartographiques, donc sur la trajectoire réelle $T_R$, le point B' de coordonnées XB', YB' qui présente la même valeur de cap, c'est-à-dire $\psi M = \psi B'$ et le même rayon de courbure.

Le point B' se trouve inscrit dans une fenêtre de probabilité dont les dimensions sont prédéterminées, croissent avec le temps compté à partir du dernier recalage et sont proportionnelles à la qualité des capteurs.

Ayant trouvé les coordonnées du point B' à partir du fichier de données cartographiques 7 et connaissant le point estimé M, on en déduit par écartométrie l'erreur d'estime B'M ainsi que ses composantes $L'_\theta$ et $L_E$.

En réalité, à l'exception du cas de trajectoire rectiligne, on fait une erreur du second ordre en ne tenant pas compte de la dérive de cap entre la position calculée B' et la position réelle B. C'est pourquoi on peut effectuer une opération ultérieure qui consiste à rechercher sur la trajectoire réelle TR le point B de coordonnées XB, YB tel que

$$\widehat{\psi B} = \widehat{\psi M} - \widehat{\Delta\theta} \quad \text{avec} \quad \widehat{\Delta\theta} \cong \overline{B'M'}/|AB'|.$$

Dans la fenêtre de probabilité il est possible de trouver plusieurs points équicaps. Cependant, on réduit d'autant les risques d'erreur que les opérations de recalage sont effectuées à cadence rapide. Il est aussi possible d'éliminer les trajectoires dont les rayons de courbure sont trop éloignés de celui qui est calculé au point estimé M.

Une autre méthode possible, dite des "vraisemblances", consiste à trouver à partir de la trajectoire TE, la trajectoire TR présentant dans une fenêtre de probabilité la plus grande similitude. Plusieurs critères de vraisemblance peuvent être choisis. Par exemple, à partir des coordonnées X et Y des points que constituent les trajectoires TE et TR inscrites dans des fichiers, on fait une analyse de l'altitude et/ou de sa dérivée, du rayon de courbure et/ou de sa dérivée, etc. La trajectoire TR étant ainsi trouvée, la position estimée du mobile est recalée sur celle-ci. On extrait alors les erreurs $L_E$ et $L_\theta$ ainsi que les corrections correspon- dantes à appliquer aux calculs de navigation.

Le système de navigation terrestre selon l'invention utilise successivement plusieurs méthodes de recalage. Une méthode d'initialisation, de préférence manuelle, est utilisée sur la première partie du parcours ; elle permet en effet une initialisation des capteurs et notamment du capteur de distance parcourue. Ensuite, un procédé de recalage automatique est mis en oeuvre.

Une navigation sans possibilité de recalage fréquent nécessite des capteurs dont le nombre et la qualité, donc la complexité et par voie de conséquence le prix, sont en rapport direct avec la précision désirée.

L'insertion de l'écartométrie précitée dans la chaîne de calculs de navigation permet, grâce au recalage périodique quasi-permanent qu'il effectue, l'utilisation de capteurs rudimentaires peu coûteux. Il est tout à fait envisageable pour des véhicules à roues de n'utiliser, par exemple, que les informations d'un compteur kilométrique et d'un capteur de direction du véhicule, de préférence un capteur magnétique donnant directement le cap, pour avoir les indications de mesure de distance/vitesse et de direction respectivement.

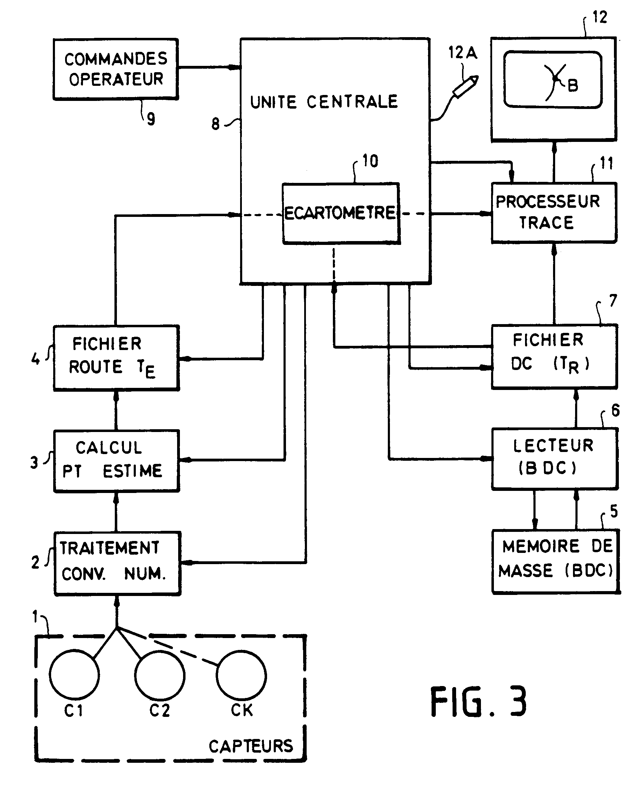

En se reportant à la figure 3, le système de navigation terrestre et de visualisation en temps réel de la position d'un véhicule comporte tout d'abord un ensemble de capteurs C1,C2,...Ck,... montés sur le véhicule. Cet ensemble comporte au moins deux capteurs, l'un pour fournir l'information distance parcourue et l'autre, l'orientation du véhicule par rapport à une direction de référence, par exemple le nord géographique. Parmi les dispositifs capteurs possibles on notera, par exemple, l'utilisation de : gyroscope, gyromètre, compas magnétique, altimètre, odomètre, etc. A la limite on peut envisager que la distance parcourue est fournie à partir d'un compteur kilométrique agencé en conséquence, et que l'orientation du véhicule est délivrée par un capteur angulaire solidaire de la commande de direction.

Les signaux fournis par les capteurs doivent être mis sous forme numérique pour être utilisés par la suite. Il est prévu un circuit de conversion analogique- numérique pour les signaux analogiques. En outre, ces signaux peuvent nécessiter des traitements, par exemple une remise en forme avant numérisation. L'ensemble de ces fonctions est symbolisé par le bloc de traitement 2.

Les données des capteurs numérisées sont transmises au bloc 3 qui représente le calcul du point estimé. Ce calcul est effectué de façon quasi-permanente, à une fréquence d'horloge, de manière à obtenir la position en temps réel du véhicule. Le bloc 3 peut consister en un microprocesseur avec une programmation correspondante ou faire partie de l'ensemble 8 de gestion et de calcul qui gère les différents circuits du système. Le calcul du point estimé est transmis dans un fichier correspondant 4 qui constitue une mémoire vive où sont stockés les points estimés successifs, c'est-à-dire la trajectoire estimée TE du véhicule.

Par ailleurs, le système comporte une mémoire de masse 5 constituant une base de données cartographiques (BDC en abrégé). Dans cette mémoire morte 5 sont stockées les données cartographiques sous forme numérique sur un support disque, bande magnétique, ou autre. A cette base de données 5 est adjoint un lecteur 6 qui, sur commande de l'unité centrale 8, va extraire dans la base 5 les données souhaitées pour la visualisation, notamment la route réelle suivie TR. La base de données 5 contient la description de l'infrastructure routière ainsi que des données culturelles (tracés des villes, ponts, forêts, renseignements alphanumériques, etc.) En fonction de la position du mobile, le module lecteur 6 prélève dans la base de données cartographiques 5 celles correspondant à la zone utile à afficher et les range dans un fichier de données cartographiques 7 constitué par une mémoire vive après les avoir mis sous forme exploitable pour l'écartométrie en 10 et pour la visualisation en 12.

La fonction d'écartométrie est symbolisée par le bloc 10 dans lequel la trajectoire estimée TE provenant du fichier 4 est comparée avec la route TR suivie ou les routes probables résultant des données stockées dans le fichier 7. L'écartométrie permet de déterminer les composantes d'écart $L_E$ et $L'_\theta$ du point M de la trajectoire estimée à l'instant de recalage et permet le recalage de cette position estimée M sur la route vraie TR ainsi que le calcul des corrections à appliquer aux indications des capteurs pour compenser les erreurs intervenant entre les deux points de mesure A,M.

Le lecteur 6 contient les données nécessaires sous forme de code pour lire, extraire, les données numériques cartographiques de la base 5 correspondant à la zone désirée. Ce lecteur peut être équipé par un microprocesseur, lui-même commandé à partir de l'unité centrale 8.

Le fichier 7 joue un double rôle de mémoire tampon, d'une part pour les données de navigation (par exemple seulement le tracé des routes) extraites de la base 5 par le lecteur 6 et qui sont nécessaires et suffisantes pour l'écartométrie et d'autre part, pour l'intégralité des données cartographiques de la zone utile en vue de l'affichage. Une seule mémoire suffit pour réaliser ces deux fonctions étant donné que les données de la carte à visualiser comportent dejà celles de navigation, dont la route TR, et qui peuvent être extraites selon un code particulier. Le bloc 11 est un processeur de tracé, (télévision ou autre) qui permet, à partir des données résultant de l'écartométrie, de marquer sur la carte la position B du véhicule et de visualiser la totalité de la carte relative à la zone prise en compte. Il permet également d'orienter cette carte, par exemple, suivant la direction du cap suivi par le véhicule, ou celle du Nord géographique.

Le dispositif de visualisation 12 peut ainsi assurer la représentation sur un fond de carte routière extraite du fichier 7 de la position corrigée B du mobile calculée par l'écartomètre 10. Un crayon optique 12A ou un autre permet à l'opérateur manuel de pointer les points caractéristiques, ou amers, sur la route suivie TR et donc de désigner ces points à l'unité centrale 8 ; il permet aussi de procéder au recalage manuel.

L'unité centrale de gestion et de calcul 8 reçoit des commandes d'opérateur en 9, transfère des informations entre les différents blocs fonctionnels indiqués et est programmée pour produire les différents calculs de position et de recalage du véhicule. Ces informations comportent des commandes d'initialisation et d'autres commandes, par exemple, des données de recalage vers le bloc de calcul 3, le recalage des données de correction vers le bloc 2, le choix du secteur géographique vers le module 6, l'information du mode de représentation vers le module 11.

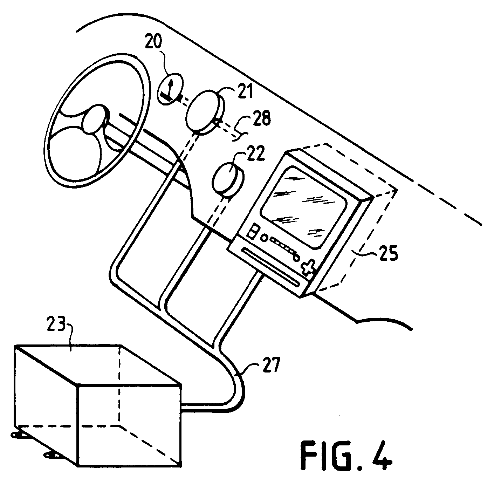

Les figures 4 à 16 se rapportent à un exemple de réalisation simplifiée d'un système de navigation terrestre conforme à l'invention permettant de mieux comprendre la mise en oeuvre du procédé de recalage de navigation utilisé et le fonctionnement.

Le système simplifié de navigation représenté sur la figure 4 se compose de quatre sous-ensembles principaux qui sont : un capteur 21 de mesure de distance placé dans un boîtier, un capteur 22 de mesure de la direction du véhicule, un boîtier 23 de traitement localisé dans le véhicule dans un lieu où il gêne le moins, le coffre par exemple, et un poste de commande et de visualisation 25 pouvant comporter la mémoire de masse BDC.

Ces quatre sous-ensembles sont reliés entre eux par des liaisons filaires 27 et sont alimentés à partir du réseau continu du véhicule.

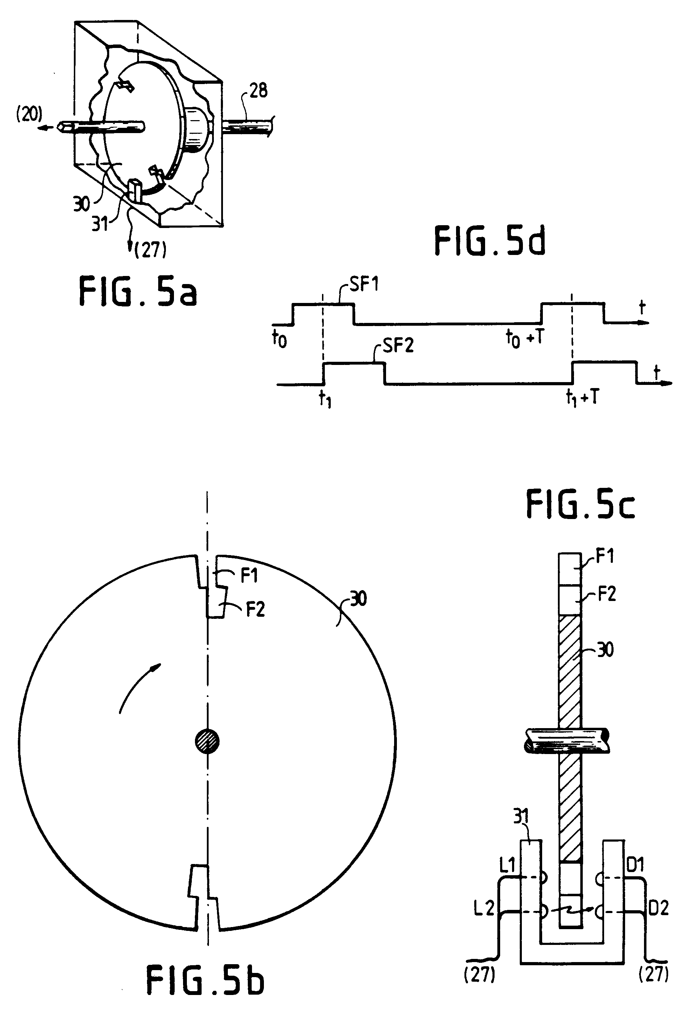

Le boîtier de mesure de distance 21 s'interpose entre un indicateur kilométrique 20 conventionnel monté sur le tableau de bord du véhicule et l'embout d'un câble 28 auquel l'indicateur est généralement connecté. Le boîtier mesure de distance 21 peut être constitué comme représenté sur la figure 5a et selon les figures de détail 5b et 5c. Il comporte, du côté du câble 28, une prise femelle adaptée à la réception de ce câble et à son autre extrémité une prise mâle correspondant à celle du câble pour être couplée à l'indicateur kilométrique 20. Il est constitué essentiellement par un disque 30 entraîné par le câble 28. Le disque 30 comporte une ou plusieurs pistes de fentes transparentes F1, F2. De part et d'autre du disque et au droit des fentes sont positionnés un ensemble 31 de diodes émettrices de lumières L1, L2 d'une part et de récepteurs optoélectroniques D1, D2 d'autre part. Lors du déplacement du véhicule, le disque est entraîné par la rotation du câble 28. Les récepteurs optoélectroniques reçoivent respectivement et successivement la lumière de la diode émettrice associée au passage des fentes respectives, ce qui donne les formes d'ondes représentées sur la figure 5d pour un découpage de fentes suivant le profil représenté. Ce découpage comporte une première fente F1 suivie d'une deuxième fente F2 décalées entre elles d'une demi-largeur de fente. Au droit d'un rayon sont disposés les couples émetteurs-récepteurs de telle sorte que l'on dispose de deux signaux détectés SF1 et SF2 déphasés dans le temps et qui permettent ensuite par traitement dans la carte interface correspondante du boîtier de traitement 23 d'identifier déjà le sens de rotation du disque et donc de reconnaître si le véhicule avance ou recule.

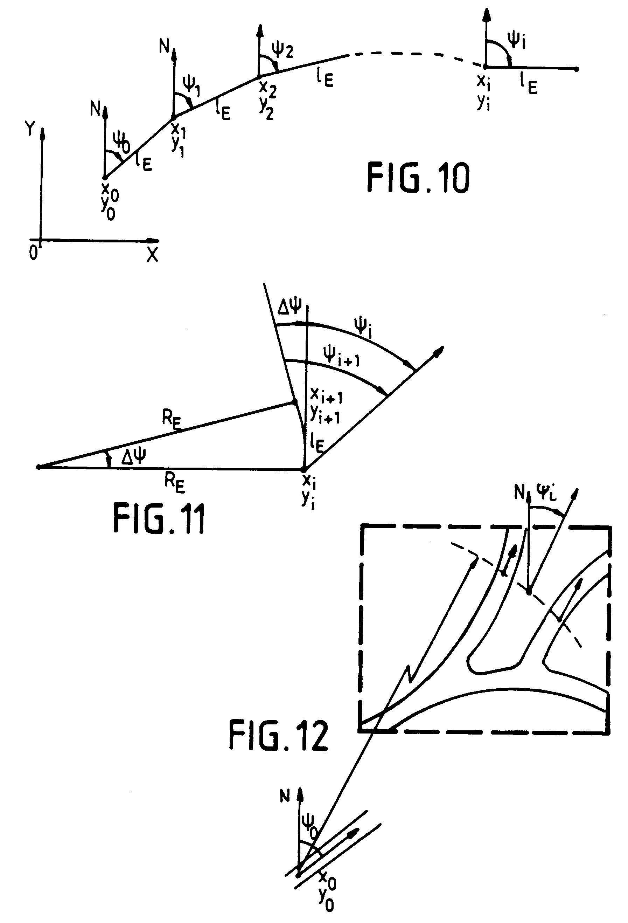

La connaissance de la distance parcourue par le véhicule se fait parallèlement par comptage des impulsions SF1 et SF2 (une impulsion par demi-tour dans le cas représenté) fournies par les récepteurs optoélectroniques D1 et D2 lors de la rotation du disque. Ce comptage est réalisé dans la carte interface-capteur correspondante du boîtier de traitement (fig.10).

Le capteur de direction 22 du véhicule est un compas magnétique. Sa fonction est de donner un signal électrique correspondant à la direction du véhicule par rapport au Nord magnétique, c'est-à-dire le cap. Tout système permettant de coder un angle peut être utilisé : capteur optoélectronique, synchrotransmetteur, etc. Dans l'application proposée, on utilise de préférence un codeur optique. Les informations angulaires codées sont envoyées au boîtier de traitement 23 par les liaisons 27.

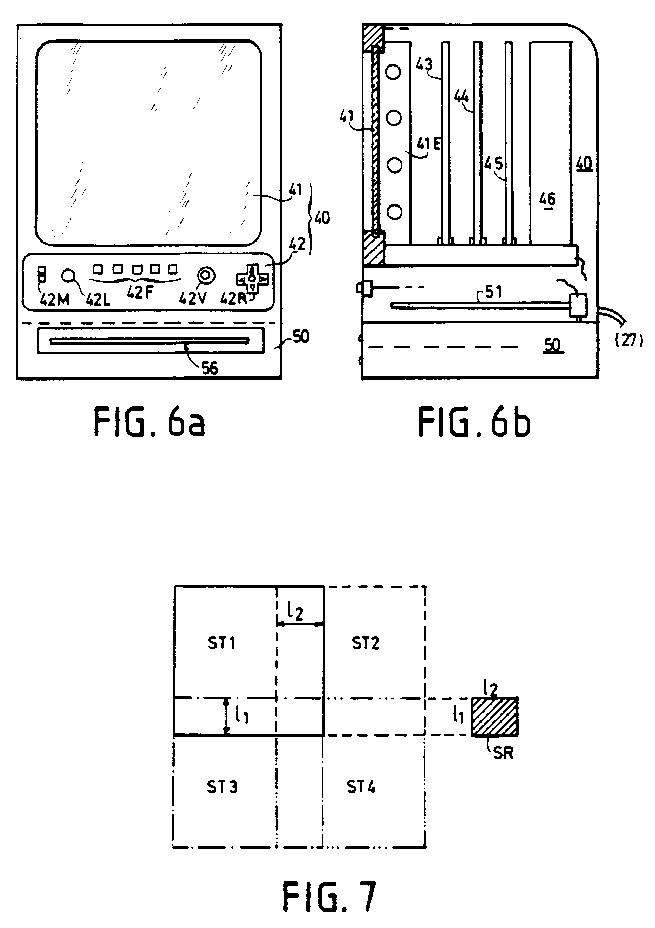

Le poste de commande et de visualisation 25 est représenté sur les figures 6a de face et 6b en vue latérale avec coupe. Il est constitué de deux parties principales dissociables fonctionnellement mais pouvant être regroupées comme figurées si la place disponible dans le véhicule le permet. Ces deux parties sont d'une part, le poste 40 de commande et de visualisation proprement dit qui correspond aux éléments 9, 11 et 12 de la figure 3, et un lecteur 50 de mémoire de masse. Dans cette réalisation la mémoire de masse est constituée par un élément amovible qui est un disque optique numérique 56. Cette dernière partie 50-56 englobe en ce sens les éléments 5, 6 de la figure 3.

Le poste de commande et de visualisation 40 est essentiellement constitué d'un écran plat LCD couleur 41, de format par exemple carré, dont les dimensions et la résolution doivent être suffisantes pour une lecture aisée d'une carte routière. Les valeurs minimales a prévoir pour une telle réalisation sont avantageusement du point de vue dimensionnel cinq pouces sur cinq pouces pour l'écran, soit 12,7cm de côté, et 250 000 pixels sur l'écran. Celui-ci peut être équipé à l'arrière d'un boîtier d'éclairage 41E permettant entre autre un fonctionnement de nuit. Le réglage de l'intensité lumineuse de cet éclairement est assumé par une commande 42L accessible par l'opérateur et placée sur un bandeau 42 de la face avant du poste 40.

Le bandeau 42 comporte toutes les commandes opérateur à savoir la commande arrêt-marche 42M, la commande de luminosité 42L, les touches de fonction 42F à commande interactive (suivant les configurations désirées, la fonction de ces touches peut être affichée sur l'écran en regard de chacune d'elles), un poussoir de validation 42V, les commandes de déplacement d'un réticule de pointage 42R (ce dernier élément remplit la fonction du crayon optique 12A de la figure 3 en tant qu'organe de désignation).

Les autres éléments visibles sur la figure 6b comportent une carte graphique 43 regroupant les fonctions processeur graphique, mémoire vidéo et interface écran, une carte mémoire 44 comportant la mémoire vive de travail et la mémoire programme, et une carte 45 regroupant les fonctions unité centrale et interface, et des alimentations 46.

A la partie inférieure le lecteur de mémoire de masse 50 comporte des mécanismes non figurés d'entraînement et de lecture du disque optique numérique 56, et des cartes 51 de commande et d'interface.

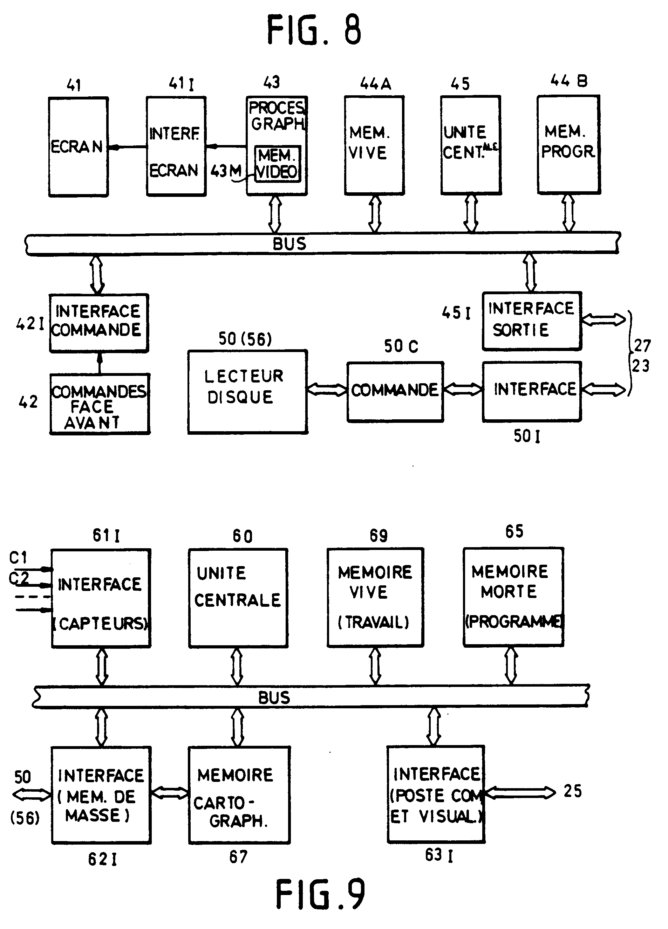

Le diagramme fonctionnel du poste de commande et de visualisation 25 est représenté sur la figure 8. Le fonctionnement du poste de commande est organisé autour d'une unité centrale à microprocesseur 44, 45 qui gère les commandes face avant 42 à travers un interface de commande 42I, les interprète et les traduit, soit en symbologie graphique pour l'affichage sur l'écran 41 de la signification des touches (commande interactive), soit en message à destination du boîtier de traitement 23 (position du réticule, lecture de la mémoire de masse, zoom, orientation et déplacement de la carte). L'unité centrale 45 élabore les primitives graphiques de la symbologie d'affichage et les range en mémoire vidéo 43M, suivant les consignes d'affichage données par le boîtier de traitement 23. Cette unité 45 gère l'écriture en mémoire vidéo 43M de la carte routière dont les primitives graphiques proviennent du boîtier de traitement 23. Afin que la transition entre deux secteurs de carte puisse se faire sans délai, la mémoire 42M est scindée en deux zones. Pendant qu'une zone est lue par le processeur graphique, l'autre est chargée par l'unité centrale 45. Après chaque commutation de secteur géographique, il y a inversion du rôle des zones mémoire. L'unité centrale 45 gère les échanges avec le boîtier de traitement 23 à travers l'interface de sortie 45I.

Un bus interne de liaison relie l'unité centrale 45 à la mémoire vive 44A, à la mémoire programme 44B, aux interfaces de commande 42I et de sortie 45I et au processeur graphique 43 avec sa mémoire vidéo 43M. Le programme de l'unité centrale 45 est écrit en mémoire morte en 44B.

Suivant les instructions écrites en mémoire vidéo 43M par l'unité centrale 45 le processeur graphique lit dans la zone désignée par l'unité centrale les primitives graphiques nécessaires à la représentation de la carte, à son déplacement, à l'affichage de la symbologie (position du véhicule, réticules divers, paramètres alphanumériques) et les traduit en adressage des cellules de l'écran 41. Ces dernières sont excitées avec les signaux électriques convenables grâce à l'interface écran 41I.

Dans l'application envisagée, la mémoire de masse 56 est un disque optique numérique. Le lecteur 50 associé est composé de mécanisme de lecture avec ses circuits de commande 50C et d'interface 50I avec le boîtier de traitement 23. Le disque optique numérique 56 contient la description de cartes routières c'est-à-dire :
- le tracé des routes sous forme d'un enchaînement de vecteurs élémentaires,
- les renseignements culturels : ville, forêts, ponts, lignes haute tension, chemins de fer, etc.
- les indications alphanumériques, noms des routes, sites, villes, etc.
- les fichiers de carte contenus sur le disque sont constitués de secteurs géographiques à recouvrement dont le principe est apparent sur la figure 7 où l'on a considéré quatre secteurs rectangulaires ST1,ST2,ST3,ST4, la zone hachurée SR correspond à la zone de carte affichable sur l'écran et les dimensions correspondantes sont prises en compte pour constituer les dimensions minimales de recouvrement entre zones.

Les fichiers de description des routes sont distincts des fichiers à caractère culturel. C'est en effet sur les fichiers descriptifs de routes que l'écartomètre doit travailler pour recaler la route estimée sur la route vraie.

La figure 9 représente un diagramme du boîtier de traitement qui assure la gestion de l'ensemble des systèmes de navigation. Il s'interface avec les autres équipements grâce aux circuits d'interface 61I avec les capteurs de mesure de distance 21 et de mesure de direction 22, aux circuits d'interface 62I avec la mémoire de masse 56, et aux circuits d'interface 63I avec le poste de commande et de visualisation 25.

Le boîtier de traitement est organisé autour d'une unité centrale à microprocesseur 60 qui dialogue avec les unités fonctionnelles représentées sur le diagramme figure 9 à l'aide d'un bus de liaison. Ces unités fonctionnelles comportent :
- les interfaces précédemment cités 61I,62I et 63I,
- une mémoire morte programme 65 contenant les programmes de l'unité centrale,
- une mémoire cartographique de travail 67 qui est partagée entre une zone de lecture et une zone d'écriture et qui contient les fichiers de route des secteurs géographiques de travail,
- la mémoire vive de travail 69.

Le traitement réalisé dans le boîtier 25 est basé sur ce qui suit. Le tracé de la route estimée peut être décomposé en vecteurs élémentaires enchaînés ayant une longueur $l_E$ et un angle par rapport à une direction de référence, tel le cap par rapport au Nord géographique (figure 10).

Pour minimiser les erreurs sur le parcours estimé, la longueur élémentaire $l_E$ doit être choisie assez petite. On prend par exemple le parcours réalisé entre deux impulsions données par le boîtier de mesures de distances 21, c'est-à-dire une rotation d'un demi-tour du disque 30.

On peut alors écrire si $\Delta\psi$ est la variation estimée de cap entre deux vecteurs élémentaires (figure 11)

$\Delta\psi_i = l_E / R_E$ où $R_E$ est le rayon de braquage estimé du véhicule et les points successifs considérés ceux de rang i et de rang i + 1.

Dans un référentiel cartésien X, Y dont l'axe Y est orienté au Nord, les coordonnées cartographiques de chacun des points $x_i y_i$ sont données par les formules :

$$x_{i+1} = x_i + l_E \sin \psi_i$$
$$y_{i+1} = y_i + l_E \cos \psi_i$$

$\psi_i$ est la valeur instantanée donnée par le compas magnétique 22. La proximité de masses métalliques dans le véhicule vient perturber les indications angulaires du capteur et les rendent non linéaires en fonction de l'angle d'orientation du véhicule ; on considère que ces erreurs ont été parfaitement compensées selon des techniques connues, soit par des aimants disposés autour du capteur, soit par des valeurs inscrites dans une table de compensation écrite en mémoire morte 65 du boîtier de traitement 23. Il n'existe qu'une erreur de zéro à l'indication du compas magnétique ; la valeur mesurée du cap s'écrit alors : $\psi_m = \psi_R + \varepsilon_\psi$

où

$\psi_m$ = indication de cap donnée par le capteur 22,

$\psi_R$ = valeur réelle de cap,

$\varepsilon_\psi$ = erreur de zéro.

Avec le boîtier de mesure de distance 21 on obtient la valeur estimée $l_E$ de la distance élémentaire parcourue :

$$l_E = l_m (1 + \varepsilon_l)$$

avec $l_m$ = parcours mesuré par le compteur de distance,

$\varepsilon_l$ = erreur sur le coefficient de mesure de distance et erreurs dues au patinage des roues, à l'usure des pneus, etc.

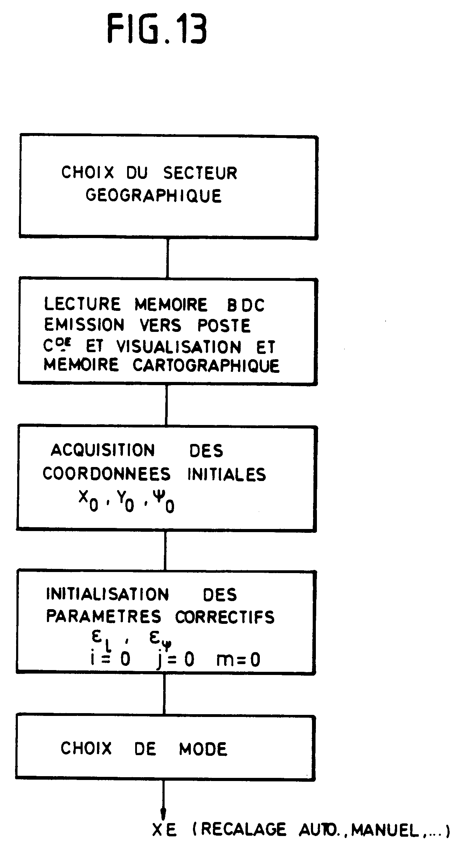

La figure 13 représente un organigramme de traitement relatif à la phase initialisation du programme. Par des commandes interactives, l'opérateur choisit le secteur géographique sur lequel il se trouve. L'ensemble des fichiers concernant ce secteur (routes, renseignements culturels) est lu dans le disque 56 et envoyé vers le poste de commande et de visualisation 25 en vue de l'affichage de la zone utile tandis que les fichiers concernant le tracé des routes sont stockés dans la mémoire cartographiques de travail 67 du boîtier de traitement 23.

Puis, à l'aide de son réticule, l'opérateur rentre les coordonnées de départ du véhicule $(x_o, y_o)$. La valeur de cap initial $\psi_o$ est fournie par le capteur 22. En l'absence d'un capteur magnétique une valeur estimée sera désignée au départ.

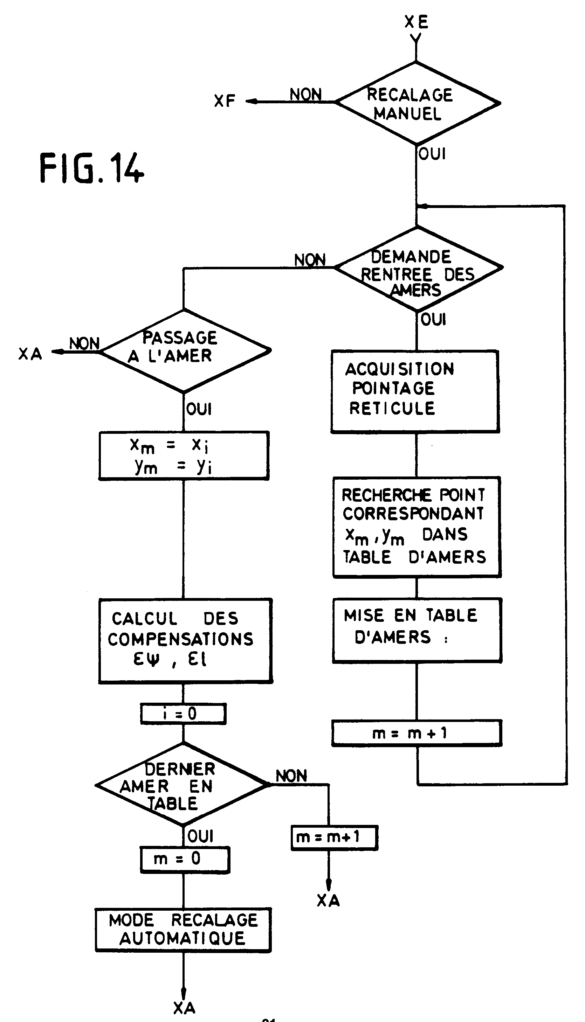

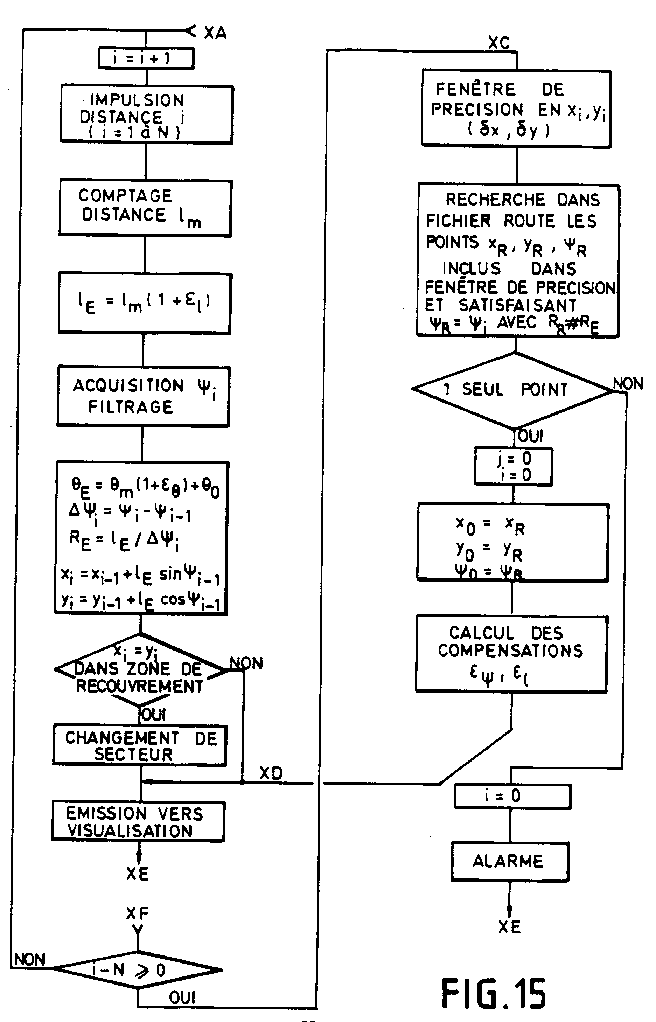

Le programme est ensuite initialisé avec les paramètres de correction $\varepsilon_l, \varepsilon_\psi$, préalablement stockés en mémoire et issus, soit d'un ajustage manuel, soit du calcul des compensations réalisé automatiquement suite à un recalage manuel (figure 14) ou automatique (figure 15).

Le recalage manuel sur amers est illustré par l'organigramme figure 14. A moins que les paramètres de corrections $(\varepsilon_\psi, \varepsilon_l)$ n'aient été conservés en mémoire et considérés comme sûrs, l'opérateur doit, sur les premiers kilomètres de son parcours, pointer au moins un amer (intersection de route, pont, ...) localisé sur sa carte.

Pour cela il demande le mode de recalage manuel à l'aide du clavier de commande. Le programme est alors aiguillé sur la demande de rentrée des amers. Chacun d'eux est désigné, dans l'ordre de passage prévu, par la position du réticule qu'il déplace sur l'écran à l'aide des commandes de déplacement réticule 42R (figure 6a) et qu'il valide en appuyant sur le poussoir de validation 42V. Les coordonnées successives des amers $(x_m, y_m)$ référencées par rapport au secteur géographique affiché sur l'écran sont rentrées dans une table d'amers.

Lorsque l'opérateur ne demande plus à rentrer des amers, le programme est aiguillé vers la condition "Passage à l'amer", déclenchée manuellement par l'opérateur au moment où son véhicule franchit un des amers qu'il avait préalablement désigné.

Tant que la condition n'est pas réalisée, le programme est aiguillé à chaque cycle en XA vers le programme de calcul de la route estimée (figure 15) et revient en XE. Ce programme, expliqué plus loin, calcule à chaque cycle les points estimés de coordonnées $x_i, y_i$.

Dès que le "Passage à l'amer" est détecté, le dernier point estimé calculé $x_i, y_i$ est comparé au premier amer trouvé dans la table d'amer $(x_m, y_m)$. En faisant coïncider les coordonnées de ces deux points, des algorithmes de filtrage permettent de ressortir les paramètres de compensations $\varepsilon_\psi$, $\varepsilon_l$ qui sont mis en mémoire pour être utilisés dans les prochaines itérations.

Après incrémentation du compteur d'amers, le programme retourne en XA vers le calcul de la trajectoire estimée. Le cycle programme se déroule ensuite comme décrit précédemment jusqu'au dernier amer enregistré dans la table. Après traitement du dernier amer de la table d'amers, le mode "recalage automatique" est imposé, jusqu'à ce que l'opérateur redemande le "recalage manuel".

Le calcul de la trajectoire estimée est illustré sur l'organigramme figure 15. Ce programme de calcul débute au point XA et comporte un certain nombre d'itérations, à chacune d'elles pouvant correspondre une impulsion du boîtier de mesure de distance. Entre deux itérations, on considère que le véhicule a parcouru une longueur estimée élémentaire $l_E$, et un nouveau point de la trajectoire estimée est calculé, mis en mémoire et envoyé vers le poste de visualisation pour affichage en superposition avec le secteur géographique.

Après acquisition et filtrage des indications $\psi_m$ données par le capteur de direction, à chaque itération les coordonnées d'un nouveau point ainsi que le rayon de courbure de la trajectoire en ce point sont calculés d'après les formules indiquées précédemment en tenant compte des paramètres de compensation $\varepsilon_l, \varepsilon_\psi$ précédemment inscrits en mémoire et issus des algorithmes de recalage automatique ou manuel.

Lorsque le point $x_i, y_i$ est trouvé dans une zone de recouvrement (figure 7) un programme déclenche la lecture du disque 56 afin de mettre en mémoire cartographique de travail le secteur adjacent sur lequel le véhicule se dirige ; les fichiers de ce nouveau secteur sont aussi envoyés au poste de commande et de visualisation pour affichage.

En mode de fonctionnement normal, c'est-à-dire avec "recalage automatique", le programme de calcul de la trajectoire estimée passe au point XF où le numéro d'itération est comparé à un nombre N pour lequel le programme est aiguillé en XC vers le calcul de recalage automatique, avec un retour en XD.

Le nombre N d'itérations peut être déterminé suivant la configuration : échelle de la carte, aspect des routes (courbes peu fréquentes ou en lacets), inclinaison de la chaussée ($\varepsilon_\psi$ important), etc. En effet il correspond à l'intervalle de distance I=NI des points de la route estimée sur lesquels un recalage automatique est effectué.

Autour du dernier point $x_i y_i$ calculé, une fenêtre d'imprécision, de dimensions prédéterminée $\delta x$ et $\delta y$, est ouverte. Les dimensions de cette fenêtre croissent avec la distance séparant deux points successifs de recalage. Le programme, recherche dans le fichier route du secteur géographique concerné, le ou les points, inclus dans la fenêtre d'imprécision et qui satisfont à l'égalité des caps élémentaires (Méthode des equicaps) $\psi_R = \psi_i$ , et qui ont des rayons de courbure voisins $R_R \simeq R_E$, $\psi_R$ et $R_R$ étant respectivement le cap et le rayon de courbure du point trouvé sur le tracé de la route réelle $T_R$ (point B' de la ligne 2).

La description des routes étant effectuée par une succession de vecteurs élémentaires, $\psi_c$ est trouvé par interpolation (valeur stockée la plus proche).

Si plusieurs points satisfont à la condition (figure 12) le programme continue sans recalage et l'opérateur en est averti pour l'inciter à demander un recalage manuel s'il le juge nécessaire. Sinon un nouveau recalage automatique est fait après N autres itérations.

Lorsque le point équicap est unique, les algorithmes de recalage de $x_i y_i$ sur $x_o y_o$ sont effectués, avec une réinitialisation du compteur d'itérations i :

$$x_o = x_R$$
$$y_o = y_R$$
$$\psi_o = \psi_R$$

Les algorithmes utilisés pour le calcul procurent un filtrage permettant de ressortir les paramètres de compensation $\varepsilon_l, \varepsilon_\psi$ qui sont mis en mémoire pour être utilisés dans les prochaines itérations. Cette méthode tend à affiner au cours du temps les compensations à intervenir.

## Revendications

1. Système de navigation terrestre visualisant en temps réel la position d'un véhicule , comportant :
   - des capteurs (1) pour élaborer des signaux représentatifs des paramètres de déplacement du véhicule, incluant au moins l'information de distance parcourue à partir d'une position de référence et celle de direction présentée par le véhicule ;
   - des moyens de traitement et de numérisation (2) des signaux délivrés par les capteurs ;
   - des premiers moyens de calcul (3) pour calculer périodiquement, à partir desdits signaux numérisés, une position dite "estimée" (M) du véhicule ;
   - des premiers moyens de mémorisation (4), en mémoire vive, pour stocker les positions estimées successives déterminant une trajectoire "estimée" (TE) du véhicule ;

- une mémoire de masse (5) constituant une base de données cartographiques numériques comportant la description point par point de routes ;
- un lecteur (6) coopérant avec la mémoire de masse pour extraire de celle-ci les données cartographiques correspondant à une zone dite "utile" choisie pour comporter la position estimée du véhicule et fournir au moins des informations de direction liées à chaque point des routes ;
- des seconds moyens de mémorisation (7), en mémoire vive, pour stocker les données de la zone utile extraites par le lecteur ;
- une unité centrale de gestion et de calcul pour coordonner le fonctionnement du système selon une programmation pré-établie ;
- un dispositif de visualisation pour visualiser la zone utile ainsi que la position du véhicule ;
- et un dispositif de désignation (12A) d'un point quelconque de l'image visualisée,

caractérisé en ce que l'unité centrale, pour permettre le recalage automatique de la trajectoire estimée sur un point de recalage, compare l'information de direction fournie par les capteurs à des informations de direction extraites de la zone utile, à l'intérieur d'une fenêtre d'imprécision centrée sur la position estimée du véhicule, la comparaison consistant à trouver un point et un seul, dans la fenêtre, dont au moins l'information de direction est sensiblement la même que l'information de direction fournie par les capteurs à un instant donné, ce point constituant le point de recalage quand il est trouvé ;

et en ce que la position du véhicule, que visualise le dispositif de visualisation (11, 12), est la dernière position du véhicule, qu'elle soit obtenue par les premiers moyens de calcul ou par recalage.

2. Système de navigation selon la revendication 1, caractérisé en ce que l'unité centrale est programmée pour calculer les variations de direction relatives respectivement à l'information de direction fournie par les capteurs et aux informations de direction stockées dans les seconds moyens de mémorisation (7) pour chacun des points de la fenêtre présentant sensiblement la même information de direction que celle fournie par les capteurs, de manière à trouver un point et un seul, dans la fenêtre, dont au moins l'information de direction et la variation de direction sont sensiblement les mêmes que respectivement l'information de direction fournie par les capteurs et la variation de direction correspondant à cette information de direction fournie par les capteurs.

3. Système de navigation selon l'une quelconque des revendications précédentes, caractérisé en ce que, pour tout recalage donné, précédé dans le temps, par un autre recalage, l'unité centrale est programmée pour calculer, comme information de direction du véhicule après le recalage donné, l'information de direction au point de recalage donné (B) corrigée d'un angle de correction ($\Delta\theta$) dont le sommet est le point de référence (A) et dont les côtés passent respectivement par le point de recalage donné et par la position estimée (M) du véhicule juste avant le recalage donné.

4. Système de navigation selon la revendication 1, caractérisé en ce que l'unité centrale est programmée pour corriger les informations des capteurs en fonction de la différence entre d'une part l'information de distance relative à la distance entre chaque point de recalage et le point de référence et d'autre part la distance entre la position estimée du véhicule juste avant le recalage considéré et le point de référence.

5. Système de navigation selon la revendication 3, caractérisé en ce que l'unité centrale est programmée pour corriger les informations des capteurs en fonction de l'angle de correction.

6. Système de navigation selon l'une quelconque des revendications précédentes, caractérisé en ce que l'unité centrale est programmée pour choisir, à un instant donné, comme point de référence, l'un des points de recalage déterminé à un instant précédant l'instant donné.

**Patentansprüche**

1. Terrestrisches Navigationssystem, das in Echtzeit die Lage eines Fahrzeugs sichtbar macht,
- mit Meßsonden (1) zur Bildung von Signalen, die für Bewegungsparameter des Fahrzeugs charakteristisch sind, einschließlich mindestens einer Information über die durchfahrene Streckenlänge ab einer Bezugsposition und einer Information über die Fahrtrichtung des Fahrzeugs,
- mit Mitteln (2) zur Verarbeitung und Digitalisierung der von den Meßsonden gelieferten Signale,
- mit ersten Rechenmitteln (3), um periodisch aus den digitalisierten Signalen eine Schätzposition (M) des Fahrzeugs zu errechnen,

- mit ersten Speichermitteln (4) in einem Arbeitsspeicher, um die aufeinanderfolgenden Schätzpositionen zu speichern, die eine geschätzte Fahrstrecke (TE) des Fahrzeugs bestimmen,
- mit einem Massenspeicher (5), der eine digitale kartographische Datenbasis mit der Beschreibung der Straßen Punkt für Punkt bildet,
- mit einem Lesegerät (6), das mit dem Massenspeicher zusammenwirkt, um diesem die einer Nutzzone entsprechenden kartographischen Daten zu entnehmen, wobei diese Nutzzone so gewählt ist, daß sie die Schätzposition des Fahrzeugs enthält, und wobei der Massenspeicher mindestens die jedem Punkt der Straßen zugeordnete Richtungsinformation liefert,
- mit zweiten Speichermitteln (7) in einem Arbeitsspeicher, um die vom Lesegerät ausgelesenen Daten der Nutzzone zu speichern,
- mit einer zentralen Verwaltungs- und Recheneinheit, um den Betrieb des Systems gemäß einer vorgegebenen Programmierung zu koordinieren,
- mit einem Sichtgerät, um die Nutzzone sowie die Lage des Fahrzeugs sichtbar zu machen,
- und mit einer Markiervorrichtung (12A), um eine beliebigen Punkt des dargestellten Bilds zu bezeichnen,

dadurch gekennzeichnet, daß die Zentraleinheit für eine automatische Nachjustierung der geschätzten Strecke an einem Nachjustierpunkt die von den Meßsonden gelieferte Richtungsinformation mit Richtungsinformationen vergleicht, die aus der Nutzzone stammen, und zwar innerhalb eines Ungenauigkeitsfensters, das auf die Schätzposition des Fahrzeugs zentriert ist, wobei der Vergleich darin besteht, genau einen Punkt in dem Fenster zu finden, bei dem zumindest die Richtungsinformation im wesentlichen dieselbe wie die von den Meßsonden in einem gegebenen Zeitpunkt gelieferte Richtungsinformation ist, so daß dieser Punkt den Nachjustierpunkt bildet, wenn er gefunden wurde, und daß die Lage des Fahrzeugs, die auf dem Sichtgerät (11, 12) angezeigt ist, die letzte Fahrzeugposition ist, unabhängig davon, ob sie von den ersten Rechenmitteln oder durch Nachjustierung gefunden wurde.

2. Navigationssystem nach Anspruch 1, dadurch gekennzeichnet, daß die Zentraleinheit so programmiert ist, daß sie die Richtungsänderungen betreffend der von den Meßsonden gelieferten Richtungsinformation bzw. der in den zweiten Speichermitteln (7) gespeicherten Richtungsinformationen für jeden Punkt des Fensters berechnet, der im wesentlichen dieselbe Richtungsinformation wie die von den Meßsonden gelieferte besitzt, so daß ein einziger Punkt in dem Fenster gefunden wird, für den mindestens die Richtungsinformation und die Richtungsänderung im wesentlichen dieselben sind wie die von den Meßsonden gelieferte Richtungsinformation bzw. Richtungsänderungsinformation.

3. Navigationssystem nach einem beliebigen der vorhergehenden Ansprüche, dadurch gekennzeichnet, daß für jede gegebene Nachjustierung, der zeitlich eine andere Nachjustierung vorausgegangen ist, die Zentraleinheit so programmiert ist, daß sie als Richtungsinformation des Fahrzeugs nach der gegebenen Nachjustierung die Richtungsinformation im gegebenen Nachjustierpunkt (B) berechnet, die um einen Korrekturwinkel (40) korrigiert ist, dessen Scheitel der Bezugspunkt (A) ist und dessen Schenkel durch den gegebenen Nachjustierpunkt bzw. die geschätzte Lage (M) des Fahrzeugs unmittelbar vor der gegebenen Nachjustierung verlaufen.

4. Navigationssystem nach Anspruch 1, dadurch gekennzeichnet, daß die Zentraleinheit so programmiert ist, daß sie die Informationen der Meßsonden abhängig von der Differenz zwischen einerseits der Entfernungsinformation bezüglich der Entfernung zwischen jedem Nachjustierpunkt und dem Bezugspunkt und andererseits der Entfernung zwischen der geschätzten Fahrzeuglage unmittelbar vor der betrachteten Nachjustierung und dem Bezugspunkt korrigiert.

5. Navigationssystem nach Anspruch 3, dadurch gekennzeichnet, daß die Zentraleinheit so programmiert ist, daß sie die Informationen der Meßsonden abhängig vom Korrekturwinkel korrigiert.

6. Navigationssystem nach einem beliebigen der vorhergehenden Ansprüche, dadurch gekennzeichnet, daß die Zentraleinheit so programmiert ist, daß sie in einem gegebenen Augenblick als Bezugspunkt einen der Nachjustierpunkte auswählt, der in einem dem gegebenen Zeitpunkt vorausgehenden Zeitpunkt bestimmt wurde.

11

## Claims

1. A system of terrestrial navigation displaying in real time the position of a vehicle, comprising:
   - pickups (1) to prepare representative signals of the parameters of movement of the vehicle, including at least the information of the distance covered from a reference position and that of the direction presented by the vehicle;
   - means for processing and digitizing (2) the signals delivered by the pickups;
   - first calculation means (3) to calculate periodically, from said digitized signals, a position designated "estimated" (M) of the vehicle;
   - first storage means (4), in active memory, to store the successive estimated positions determining an "estimated" trajectory (TE) of the vehicle;
   - a mass memory (5) constituting a base of cartographic digital data comprising the point by point description of routes;
   - a reader (6) cooperating with the mass memory to extract therefrom the cartographic data corresponding to a zone designated "useful" selected to comprise the estimated position of the vehicle and to supply at least directional data linked to each point of the routes;
   - second storage means (7), in active memory, to store the data of the useful zone extracted by the reader;
   - a central management and calculation unit to coordinate the functioning of the system according to a pre-established programming;
   - a display device to display the useful zone and also the position of the vehicle;
   - and a designation device (12a) of any point of the displayed image,
   characterised in that the central unit, to permit the automatic resetting of the estimated trajectory on a resetting point, compares the direction information supplied by the pickups with the direction information extracted from the useful zone, inside an imprecision window centred on the estimated position of the vehicle, the comparison consisting in finding one, and only one, point in the window , at least the direction information of which is substantially the same as the direction information supplied by the pickups at a given instant, this point constituting the resetting point when it is found;
   and in that the position of the vehicle, which is displayed by the display device (11,12), is the last position of the vehicle, whether it is obtained by the first calculation means or by resetting.

2. A navigation system according to Claim 1, characterised in that the central unit is programmed to calculate the variations in direction relative respectively to the direction information supplied by the pickups and to the direction data stored in the second storage means (7) for each of the points of the window having substantially the same direction information as that supplied by the pickups, so as to find one point, and only one, in the window, at least the direction information of which, and the direction variation, are substantially the same, respectively, as the direction information supplied by the pickups and the direction variation corresponding to this direction information supplied by the pickups.

3. A navigation system according to any one of the preceding claims, characterised in that, for any given resetting, preceded in time by another resetting, the central unit is programmed to calculate, as direction information of the vehicle after the given resetting, the direction information at the given resetting point (B) corrected by a correction angle ($\Delta\theta$), the apex of which is the reference point (A) and the sides of which pass respectively through the given resetting point and through the estimated position (M) of the vehicle just before the given resetting.

4. A navigation system according to Claim 1, characterised in that the central unit is programmed to correct the data of the pickups as a function of the difference between, on the one hand, the distance information relative to the distance between each resetting point and the reference point, and, on the other hand, the distance between the estimated position of the vehicle just before the resetting concerned and the reference point.

5. A navigation system according to Claim 3, characterised in that the central unit is programmed to correct the data of the pickups as a function of the correction angle.

6. A navigation system according to any one of the preceding claims, characterised in that the central unit is programmed to select, at a given instant, as reference point, one of the resetting points determined at an instant preceding the given instant.

# FIG.1

# FIG. 2

FIG. 3

FIG. 4

FIG.5a

FIG.5d

FIG.5b

FIG.5c

FIG. 6a

FIG. 6b

FIG. 7

# FIG. 8

# FIG.9

EP 0 357 515 B1

FIG.10

FIG.11

FIG.12

# FIG.13

CHOIX DU SECTEUR
GEOGRAPHIQUE

LECTURE MEMOIRE BDC
EMISSION VERS POSTE
C$^{\underline{oe}}$ ET VISUALISATION ET
MEMOIRE CARTOGRAPHIQUE

ACQUISITION DES
COORDONNEES INITIALES
$X_0$ , $Y_0$ , $\Psi_0$

INITIALISATION DES
PARAMETRES CORRECTIFS
$\varepsilon_L$ , $\varepsilon_\Psi$
$i = 0$   $j = 0$   $m = 0$

CHOIX DE MODE

$X_E$  (RECALAGE AUTO.,MANUEL,...)

# FIG.14

< XA

i = i + 1

IMPULSION
DISTANCE i
( i = 1 à N )

COMPTAGE
DISTANCE $l_m$

$l_E = l_m ( 1 + \varepsilon_l )$

ACQUISITION $\Psi_i$
FILTRAGE

$\theta_E = \theta_m ( 1 + \varepsilon_\theta ) + \theta_0$
$\Delta \Psi_i = \Psi_i - \Psi_{i-1}$
$R_E = l_E / \Delta \Psi_i$
$x_i = x_{i-1} + l_E \sin \Psi_{i-1}$
$y_i = y_{i-1} + l_E \cos \Psi_{i-1}$

$x_i = y_i$
DANS ZONE DE
RECOUVREMENT — NON

OUI

CHANGEMENT DE
SECTEUR

XD

EMISSION VERS
VISUALISATION

XE

XF

NON — i − N ⩾ 0 — OUI

XC

FENÊTRE DE
PRECISION EN $x_i , y_i$
( $\delta x , \delta y$ )

RECHERCHE DANS
FICHIER ROUTE LES
POINTS $x_R , y_R , \Psi_R$
INCLUS DANS
FENÊTRE DE PRECISION
ET SATISFAISANT
$\Psi_R = \Psi_i$ AVEC $R_R \neq R_E$

1 SEUL POINT — NON

OUI

$j = 0$
$i = 0$

$x_0 = x_R$
$y_0 = y_R$
$\Psi_0 = \Psi_R$

CALCUL DES
COMPENSATIONS
$\varepsilon_\Psi , \varepsilon_l$

i = 0

ALARME

XE

**FIG.15**

22